# FASCICULE DE BREVET EUROPEEN

(11) **EP 1 115 592 B1**
(45) Date de publication et mention de la délivrance du brevet: **29.12.2004**
(21) Numéro de dépôt: 00951650.1
(22) Date de dépôt: 11.07.2000
(51) Int. Cl.: B60N 2/28

(54) **SIEGE INCLINABLE POUR ENFANTS A COTES LATERAUX PIVOTANTS**
KINDERSITZ MIT NEIGBARER RÜCKENLEHNE UND SCHWENKBAREN SEITENTEILEN
RECLINABLE CHILD SEAT WITH PIVOTING LATERAL SIDES

(30) Priorité: 23.07.1999 FR 9909612
(43) Date de publication de la demande: 18.07.2001
(73) Titulaire: Ampafrance S.A., 49300 Cholet (FR)
(72) Inventeur: SUROT, Patrick, F-49300 Cholet (FR)
(74) Mandataire: Casalonga, Axel
(86) Numéro de dépôt international: PCT/FR2000/002001
(87) Numéro de publication internationale: WO 2001/007286

(56) Documents cités:
- EP-A- 0 401 086
- EP-A- 0 635 394
- FR-A- 2 750 373
- GB-A- 2 311 094

## Description

La présente invention a pour objet un siège de sécurité pour enfants destiné à être monté sur un siège de véhicule automobile, du type comportant une coque formant baquet présentant des côtés latéraux.

Les sièges de sécurité pour enfants destinés à l'automobile doivent permettre d'assurer un maximum de protection de l'enfant en cas d'accident et ce, dans les meilleures conditions de confort possibles.

On connaît par la demande de brevet français n° 2 750 373 (AMPAFRANCE) un siège de sécurité pour enfants selon le préambule de la revendication 1 comportant des moyens permettant d'incliner l'ensemble du baquet dans lequel est logé l'enfant, de façon à pouvoir le placer en position de repos allongée ou en position assise. Dans une variante, il est également prévu une modification de la largeur du baquet, indépendamment de l'inclinaison de ce dernier. A cet effet, le siège comprend un dispositif à vis et écrou monté sous l'assise du siège et comprenant une vis à pas rapide montée en vue de sa rotation entre un palier solidaire de la face inférieure de l'assise et un palier solidaire d'une portion inclinée de l'avant de la partie d'assise du siège. La vis coopère avec un écrou monté basculant par rapport à une embase soutenant le baquet et destinée à être posée et fixée sur le siège du véhicule automobile. Le siège comporte deux éléments de châssis latéraux définissant deux armatures d'accoudoir pivotant entre une position mutuellement rapprochée et une position écartée. Ces éléments de châssis sont constitués par des portions de tubes métalliques habillés chacun d'un rembourrage approprié. Le pivotement des deux éléments de châssis latéraux est commandé au moyen d'un plateau rotatif dont la rotation est provoquée par un pignon décalé engrenant avec une portion filetée coaxiale à la vis à pas rapide qui commande l'inclinaison du baquet.

Cette construction présente une certaine complexité. Elle est en outre relativement fragile et nécessite un effort assez important pour obtenir le pivotement des deux éléments latéraux par l'intermédiaire des engrenages qui doivent être prévus. Par ailleurs, l'utilisation d'un rembourrage habillant chaque tube métallique des éléments de châssis latéraux pivotants entraîne également une certaine complexité de fabrication et ne permet pas aisément une adaptation de la forme des éléments latéraux et des accoudoirs sur chaque modèle de sièges.

La présente invention a pour objet d'améliorer un siège de ce type en facilitant sa construction tout en rendant plus simple son fonctionnement.

Tel qu'il est, revendiqué, le siège de sécurité pour enfants, destiné à être monté sur un siège de véhicule automobile, est du type comportant une coque formant baquet présentant des côtés latéraux et un châssis support de la coque, adapté pour être posé sur le siège du véhicule automobile. La coque est mobile par rapport au châssis support par l'intermédiaire d'un dispositif de réglage d'inclinaison comportant une vis rotative coopérant avec un écrou pivotant. Les côtés latéraux de la coque sont montés pivotants par l'intermédiaire d'un dispositif de réglage de largeur. Le dispositif de réglage de largeur comprend un élément rotatif, Un dispositif de transmission de mouvement rotatif est monté entre une molette d'actionnement et ledit élément rotatif. Deux tringles de liaison de longueur sensiblement égale sont articulées chacune, à l'une de leurs extrémités sur ledit élément rotatif et à leur autre extrémité sur un axe de support et de pivotement des côtés latéraux de la coque.

Selon l'invention, l'élément rotatif est monté autour de l'axe de la vis rotative du dispositif de réglage d'inclinaison de façon à tourner librement par rapport à la dite vis.

L'élément rotatif comporte avantageusement deux surfaces capables d'entrer en contact avec deux butées de fin de course solidaires de la coque pour limiter la rotation de l'élément rotatif.

De préférence, le dispositif de transmission de mouvement rotatif comprend un moyen de démultiplication de l'effort de rotation exercé sur la molette d'actionnement. De cette manière il est pratiquement impossible à l'enfant de provoquer un mouvement de pivotement des côtés latéraux du siège en agissant directement sur les côtés latéraux. De plus, le réglage de l'écartement des côtés latéraux se fait sans effort en agissant sur la molette d'actionnement.

A cet effet, le dispositif de transmission de mouvement rotatif peut comprendre avantageusement un ensemble de deux roues dentées à axes parallèlles, l'une étant bloquée en rotation.Une roue à denture externe est montée libre en rotation sur une portion excentrée d'un arbre solidaire de la molette d'actionnement. Un moyen est prévu pour empêcher la dite roue à denture externe de tourner tout en lui laissant une liberté de mouvement. L'élément rotatif précité, monté libre en rotation sur l'arbre de la molette d'actionnement, comporte quant à lui une denture interne capable de coopérer avec la denture externe précitée. Le diamètre de la denture externe est inférieur à celui de la denture interne de façon que la coopération des deux dentures ne se fasse, compte tenu de l'excentricité, que sur faible portion des dentures. La roue à denture externe peut comporter par exemple une dent de moins que la denture interne de l'élément rotatif.

La roue à denture externe comporte avantageusement un plot en saillie coopérant avec une lumière pratiquée sur la coque. De cette manière, cette roue est empêchée d'effectuer une rotation autour de son axe.Elle peut néammoins être animée de petits mouvements, analogues à un mouvement de précession, résultant du montage excentré, ces mouvements étant rendus possible par les dimensions appropriées de la lumière précitée.Lors de ces mouvements, les dents de la denture externe, entrent succesivement en contact avec certaines dents de la denture interne, en exercant sur celle-ci une poussée sensiblement tangentielle qui provoque une rotation de l'élément rotatif. La denture externe se comporte donc comme une came agissant sur la denture interne.Un tour de rotation complet de la molette d'actionnement provoque une rotation de l'élément rotatif de la valeur angulaire d'une dent.Bien entendu la disposition pourrait être inversée, la denture externe étant prévue sur l'élément rotatif et la denture interne montée sur l'arbre de la molette d'actionnement.

Dans un mode de réalisation avantageux du siège de sécurité pour enfants selon l'invention, les axes de support et de pivotement des côtés latéraux de la coque présentent chacun des extrémités coaxiales pivotant dans des paliers solidaires de la coque et une partie intermédiaire sinueuse coopérant avec deux demi-carcasses en matière plastique moulée. Au montage du siège, il devient possible de choisir la forme des demi-carcasses appropriée à la forme qui doit être donnée aux accoudoirs de chaque modèle de siège. De plus, l'habillage des demi-carcasses de profil arrondi remplace avantageusement les rembourrages des tubes métalliques utilisés jusqu'à présent.

L'invention sera mieux comprise à l'étude d'un mode de réalisation détaillé fait à titre d'exemple et illustré par les dessins annexés, sur lesquels :
la figure 1 est une vue de côté d'un siège de sécurité pour enfants selon l'invention dans sa position maximale inclinée;
la figure 2 est une vue de face du siège de la figure 1 montrant les côtés latéraux dans leur position la plus écartée;
la figure 3 est une vue schématique partielle montrant les moyens d'actionnement du pivotement des côtés latéraux en vue extérieure;
la figure 4 est une vue analogue à la figure 3 montrant néanmoins les différents éléments en coupe agrandie et en vue partiellement éclatée afin de mieux faire comprendre leur structure;
la figure 5 est une vue prise de face de l'élément rotatif montrant en outre la position des tringles de liaison reliées aux côtés latéraux dans une première position;
la figure 6 est une vue analogue à la figure 5 montrant une autre position;
la figure 7 est une vue schématique d'un ensemble de deux roues dentées du disposifif de transmission d'un mouvement rotatif dans une première position;
la figure 8 est une vue identique à la figure 7 dans une deuxième position après rotation de la molette d'actionnement de 90°; et
la figure 9 est une vue identique à la figure 8 après une nouvelle rotation de 90°.

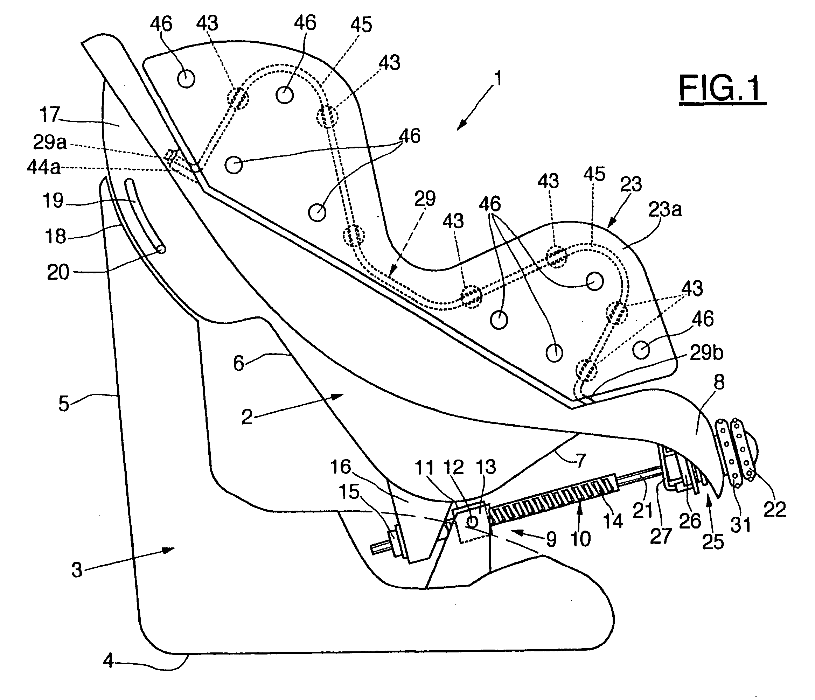

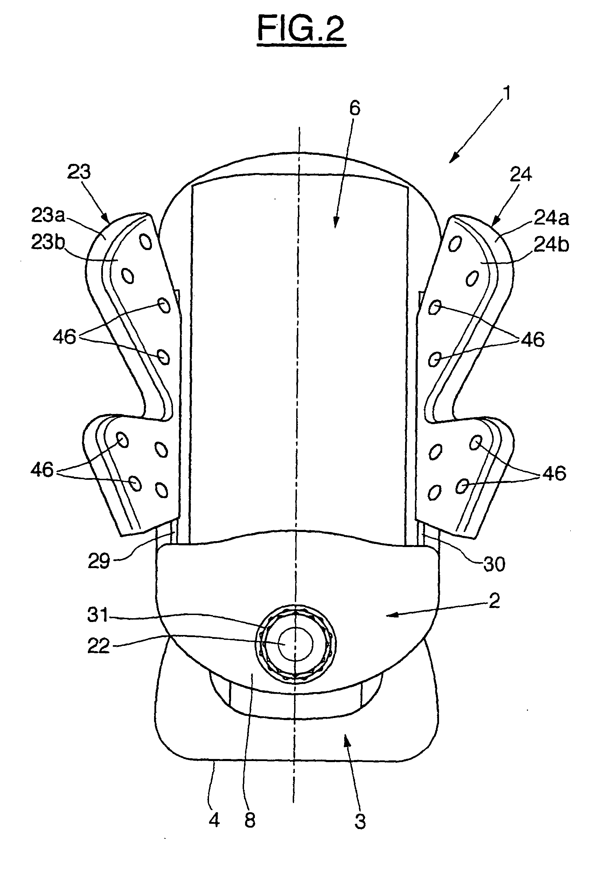

Tel qu'il est illustré sur les figures 1 et 2, le siège de sécurité pour enfants référencé 1 dans son ensemble comporte une coque 2 formant baquet et un châssis 3 supportant la coque 2, l'ensemble étant réalisé en matière plastique moulée. Le châssis support 3 est adapté pour être posé sur le siège non représenté d'un véhicule automobile, la face inférieure sensiblement horizontale 4 du châssis support 3 reposant sur l'assise du siège du véhicule automobile et la partie sensiblement verticale 5, à l'arrière du châssis support 3, venant en contact avec le dossier du siège du véhicule automobile.

La coque de siège 2 formant baquet présente une partie arrière 6 jouant le rôle de dossier pour le siège 1 et une partie d'assise 7. La coque de siège 2 se termine dans sa partie inférieure par une portion avant 8 qui peut servir d'appui aux jambes de l'enfant.

La coque 2 est mobile par rapport au châssis support 3 par l'intermédiaire d'un dispositif de réglage d'inclinaison référencé 9 dans son ensemble. Le dispositif de réglage d'inclinaison 9 comprend une vis rotative 10, de préférence à pas rapide comme illustré sur les figures. La vis 10 peut coopérer avec un écrou 11 pivotant par rapport à un axe 12 monté sur des supports 13 solidaires du châssis 3.

Dans l'exemple illustré, la vis 10 est réalisée en matière plastique moulée sous la forme d'un élément tubulaire comprenant une partie filetée externe 14. Une extrémité de la vis 10 est montée dans un palier 15 solidaire de supports 16 faisant partie de la coque 2 sous la partie d'assise 7 de celle-ci.

A la partie supérieure du dossier 6 et sur sa face arrière, la coque 2 présente une portion 17 convexe vers l'arrière capable de glisser le long d'une portion concave correspondante 18 pratiquée à la partie supérieure de la partie arrière 5 du châssis support 3. Une lumière oblongue et incurvée 19 est pratiquée de chaque côté de la portion bombée 17 et reçoit un axe fixe 20 solidaire du châssis support 3.

La coque de siège 2, sous l'action du dispositif de réglage d'inclinaison 9 et grâce à l'existence des lumières 19 coopérant avec l'axe 20, peut donc être placée selon les souhaits de l'utilisateur, dans une position inclinée telle qu'illustrée sur la figure 1 ou dans une position relevée où le dossier 6 est plus vertical que sur la figure 1. L'inclinaison de la coque 2 peut être réglée en continu entre ces deux positions par rotation de la vis 10, l'écrou 11 pivotant par rapport à l'axe 12 lors de ce mouvement.

Dans l'exemple illustré, l'entraînement en rotation de la vis tubulaire 10 se fait au moyen d'un axe métallique 21 de section octogonale, la rotation de l'axe 21 étant obtenue par rotation d'une molette de commande manuelle 22 montée à l'extrémité de l'axe 21 qui traverse la portion avant 8 de la coque 2, la molette de commande 22 étant montée à l'extérieur de la portion 8.

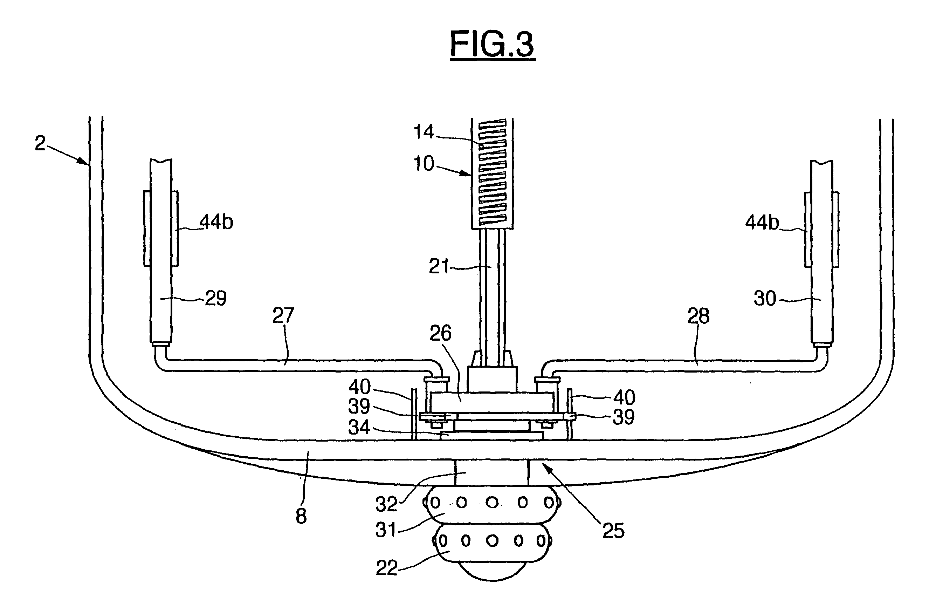

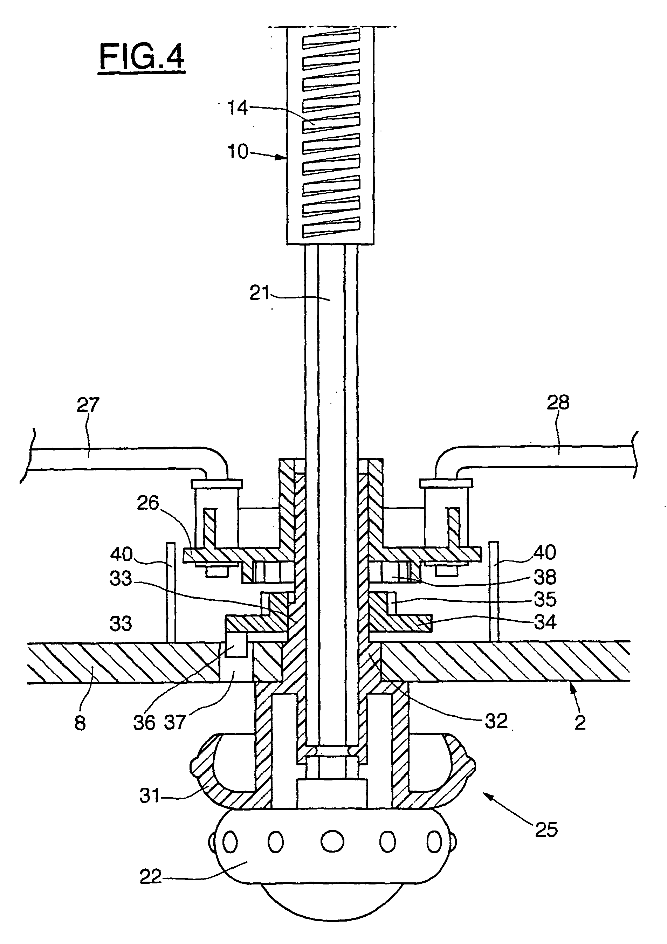

La coque 2 présente deux côtés latéraux 23, 24 (figure 2), montés pivotants par rapport à la coque 2 par l'intermédiaire d'un dispositif de réglage de largeur référencé 25 dans son ensemble et illustré plus particulièrement sur les figures 3 et 4.

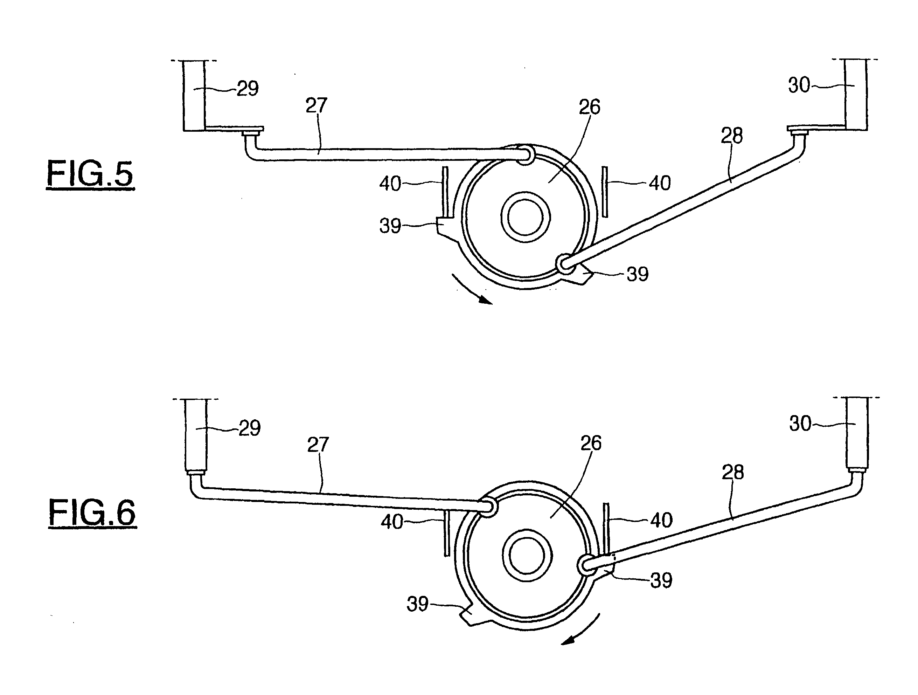

En se référant plus particulièrement à la vue éclatée de la figure 4, on voit que le dispositif de réglage de la largeur 25 comprend un élément rotatif 26 qui peut tourner librement par rapport à l'axe 21 de la vis rotative 10. Deux tringles de liaison 27, 28, de longueur sensiblement égale, sont articulées chacune à l'une de leurs extrémités sur l'élément rotatif 26 au voisinage de sa périphérie et, dans l'exemple illustré, avec un écartement d'environ 140° comme on peut le voir sur les figures 5 et 6. A leur autre extrémité, chacune des tringles 27, 28 est articulée sur l'extrémité d'un axe de support et de pivotement 29, 30 pour chacun des côtés latéraux 23, 24.

Une molette d'actionnement manuel 31 est solidaire d'un arbre tubulaire 32 monté autour de l'axe 21 de la vis rotative 10 et traversant la paroi de la portion 8 de la coque 2. L'arbre tubulaire 32 peut tourner librement par rapport à l'axe 21.

La molette de commande 22 pour la rotation de l'axe 21 est, dans l'exemple illustré, de diamètre inférieur à celui de la molette d'actionnement 31, laquelle est disposée entre la molette 22 et la face extérieure de la portion 8 de la coque 2. De cette manière, il est possible d'actionner sélectivement, soit la molette 22 pour le réglage d'inclinaison de la coque de siège 2, soit la molette 31 pour le réglage de largeur par pivotement des côtés latéraux 23, 24.

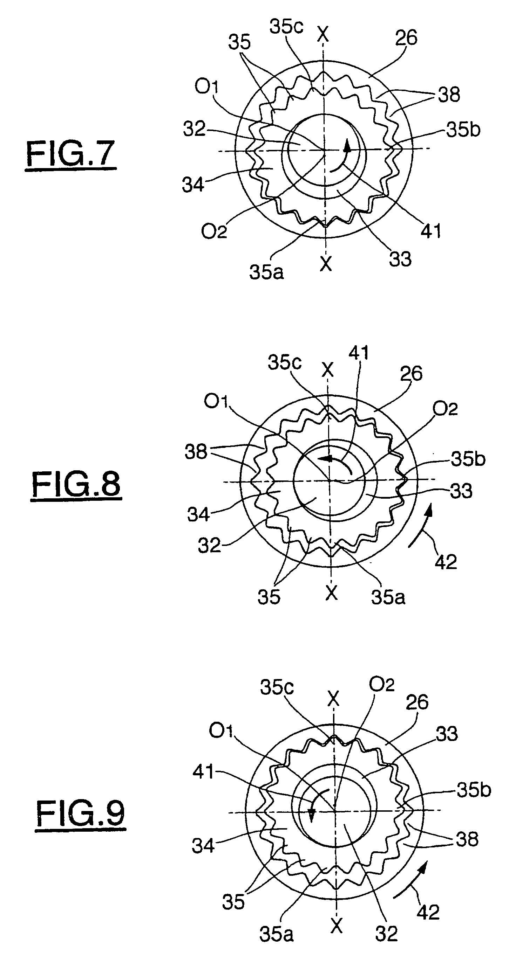

L'arbre 32 présente, du côté intérieur après traversée de la paroi de la portion 8, une portion excentrée 33, sur laquelle est montée, libre en rotation, une roue 34 présentant une denture externe 35 (voir également figures 7 à 9).

Un plot 36 solidaire de la roue 34, fait saillie en direction de l'extérieur de façon à pénétrer dans une lumière 37 de forme oblongue et de dimension supérieure à celle du plot 36, la lumière 37 étant pratiquée dans la paroi de la portion 8 de la coque 2.

L'élément rotatif 26 présente, quant à lui, une denture interne 38 capable de coopérer comme on va l'indiquer avec la denture externe 35. Bien entendu, la denture 35 coopère en partie avec la denture 38 comme illustré sur les figures 7 à 9 et contrairement à ce qui est visible sur la vue éclatée de la figure 4.

L'élément rotatif 26 comporte sur sa périphérie deux plots en saillie 39, visibles en particulier sur les figures 5 et 6 et faisant entre eux dans l'exemple illustré un angle d'environ 100°. Les surfaces en saillie des deux plots 39 sont capables d'entrer en contact respectivement avec deux butées de fin de course 40 solidaires de la coque 2, par exemple sous la forme de nervures venues de moulage.

En se référant aux figures 7 à 9, il apparaît que la denture externe 35 de la roue 34 est d'un diamètre externe légèrement inférieur au diamètre interne de la denture 38 de l'élément rotatif 26. Compte tenu du montage de la roue 34 sur la portion excentrée 33 de l'axe 32, un certain nombre de dents de la denture 35 se trouvent en prise avec des dents de la denture 38 comme illustré sur la figure 7. Dans l'exemple illustré, la denture externe 35 comporte une dent de moins que la denture interne 38.

Dans la position illustrée sur la figure 7, le centre O₂ de la portion excentrée 33 se trouve au dessous, avec un certain écartement, du centre O₁ de l'arbre 32. La denture externe 35 est centrée sur le centre O₂, tandis que la denture interne 38 est centrée sur le centre O₁. Dans la position illustrée sur la figure 7, le centre O₂ se trouve sur la verticale XX qui passe par le centre O₁. La dent 35a de la denture externe 35 qui se trouve en face de la partie en saillie excentrée 33 et alignée avec la ligne XX est en prise avec la denture 38, comme les quelques dents qui l'entourent.

Si l'on provoque une rotation de l'arbre 32 et de la portion excentrée 33 dans le sens de la flèche 41 de 90° dans le sens inverse des aiguilles d'une montre pour arriver dans la position de la figure 8, le centre O₂ tourne de 90° autour du centre O₁ et se trouve sur la droite du centre O₁. La portion excentrée 33 s'est déplacée dans les mêmes conditions de 90°. La dent 35a a subi la même rotation que le centre O₂, c'est-à-dire s'est déplacée vers le haut et vers la droite. Dans ce déplacement, elle a agi sur la denture 38 dans le sens de rotation selon la flèche 42, c'est-à-dire dans le même sens que la flèche 41. L'effort tangentiel transmis par la dent 35a analogue à une came a provoqué la rotation de l'élément 26. La dent 35b qui se trouve en face de la partie en saillie excentrée 33, est maintenant en prise avec la denture 38.

Si l'on poursuit la rotation, toujours dans le même sens de la flèche 41, de 90° pour aboutir à la position illustrée sur la figure 9, le centre O₂ vient au-dessus du centre O₁ aligné selon la ligne XX. Dans cette position, la dent 35a s'est déplacée et a pris la position décalée illustrée sur la figure 9. Dans cette position, cependant, la dent 35a n'est plus en prise avec la denture 38. C'est la dent 35c qui se trouve maintenant en face de la partie en saillie excentrée 33 qui est en prise avec la denture 38, tandis que la dent 35b a agi tangentiellement à la manière d'une came sur la denture 38 dans le sens provoquant sa rotation selon la flèche 42.

Bien entendu, toutes les dents de la denture 35 entourant respectivement les dents 35a, 35b et 35c, qui sont plus ou moins engrenées avec la denture 38 agissent de la même façon lors de ce mouvement, analogue à un mouvement de précession, de la roue 34 équipée de la denture 35 et ce de manière à provoquer une rotation dans le sens de la flèche 42 de l'élément rotatif 26 équipé de la denture interne 38.

On comprend que c'est grâce à l'existence du plot 36 (figures 3 et 4) coopérant avec la lumière 37 qui empêche une rotation de la roue 34, qu'il est possible d'obtenir un petit déplacement de celle-ci en fonction de la portion excentrée 33, chaque point de la roue 34 se déplaçant comme le centre O₂ autour du centre O₁ selon un petit cercle dont le rayon est égal à la distance O₁/O₂. Ce petit mouvement entraîne, à chaque rotation complète de 180° de l'arbre 32 et de la portion excentrée 33, une rotation de l'élément rotatif 26 de la valeur d'une dent compte tenu de la différence d'une dent entre les dentures 35 et 38. Il en résulte une importante démultiplication de l'effort qui permet de commander aisément le réglage d'inclinaison des côtés latéraux 23, 24 en agissant sur la molette d'actionnement manuel 31. La rotation de l'élément rotatif 26 provoque en effet, comme on peut le voir sur les figures 5 et 6, le déplacement des tringles de liaison 27, 28 d'une première position illustrée sur la figure 5 qui correspond à l'écartement minimal des côtés latéraux 23, 24 jusqu'à une position illustrée sur la figure 6 qui correspond au contraire à un écartement maximal des côtés latéraux 23, 24, comme représenté à titre d'exemple sur la figure 2. Les plots en saillie 39 coopérant avec les butées 40, permettent de limiter ces mouvements.

La démultiplication d'effort obtenue par les moyens explicités précédemment permet également d'éviter que l'enfant puisse, en appuyant directement sur les côtés latéraux 23, 24, provoquer leur rapprochement ou leur écartement.

Dans l'exemple illustré sur les figures 1 et 2, les côtés latéraux 23, 24 sont constitués chacun par deux demi-carcasses en matière plastique moulée 23a, 23b et 24a, 24b à bords arrondis. Les deux demi-carcasses sont maintenues avec un écartement convenable par des plots venus de moulage tels que les plots 46. Les axes de support et de pivotement 29, 30 présentent des extrémités coaxiales 29a, 29b (figure 1) qui pivotent dans des paliers 44a, 44b solidaires de la coque 2. Les axes de support et de pivotement 29, 30 présentent en outre une partie intermédiaire sinueuse 45 (figure 1) qui suit approximativement la forme extérieure que l'on souhaite donner aux côtés latéraux 23, 24 au moyen des demi-carcasses 23a, 23b et 24a, 24b. La forme sinueuse 45 permet en outre d'assurer une rigidité convenable des côtés latéraux 23, 24 malgré leur réalisation sous la forme de demi-carcasses en matière plastique moulée. La fixation des deux demi-carcasses 23a, 23b et 24a, 24b se fait avantageusement par encliquetage sur des plots en saillie tels que les plots 43 illustrés sur la figure 1, venus de moulage avec les demi-carcasses.

La disposition particulière de l'axe 21 de la vis rotative à pas rapide 10 dans le plan médian du siège 1 sous la coque 2 ainsi que celle du dispositif de réglage de largeur 25 coaxialement par rapport à la vis rotative 10, permet de simplifier considérablement la fabrication et le montage du siège de sécurité selon l'invention. De plus, la structure particulière du dispositif de réglage de largeur avec son dispositif de transmission de mouvement rotatif à démultiplication d'effort, permet d'obtenir un réglage aisé de l'écartement des côtés latéraux et une meilleure sécurité de fonctionnement.

## Revendications

1. Siège de sécurité pour enfants destiné à être monté sur un siège de véhicule automobile, du type comportant une coque (2) formant baquet présentant des côtés latéraux (23, 24) et un châssis support (3) de la coque (2), adapté pour être posé sur le siège du véhicule automobile, la coque étant mobile par rapport au châssis support par l'intermédiaire d'un dispositif (9) de réglage d'inclinaison comportant une vis rotative (10) coopérant avec un écrou pivotant (11), les côtés latéraux (23, 24) de la coque étant montés pivotants par l'intermédiaire d'un dispositif de réglage de largeur (25), le dispositif de réglage de largeur comprenant :
- un élément rotatif (26) ;
- un dispositif (25) de transmission de mouvement rotatif monté entre une molette d'actionnement (31) et ledit élément rotatif (26);
- et deux tringles de liaison (27, 28) de longueur sensiblement égale articulées chacune à l'une de leurs extrémités sur ledit élément rotatif (26) et à leur autre extrémité sur un axe (29, 30) de support et de pivotement des côtés latéraux de la coque, **caractérisé par le fait que** l'élément rotatif (26) est monté autour de l'axe de la vis rotative du dispositif de réglage d'inclinaison, de façon à tourner librement par rapport à la dite vis.

2. Siège de sécurité pour enfants selon la revendication 1, **caractérisé par le fait que** l'élément rotatif comporte deux surfaces (39) capables d'entrer en contact avec deux butées de fin de course (40) solidaires de la coque (2) pour limiter la rotation de l'élément rotatif (26).

3. Siège de sécurité pour enfants selon les revendications 1 ou 2, **caractérisé par le fait que** le dispositif (25) de transmission de mouvement rotatif comprend un moyen de démultiplication de l'effort de rotation exercé sur la molette d'actionnement.

4. Siège de sécurité pour enfants selon l'une quelconque des revendications précédentes, **caractérisé par le fait que** le dispositif de transmission de mouvement rotatif comprend un ensemble de deux roues dentées à axes parallèlles, l'une étant bloquée en rotation.

5. Siège de sécurité pour enfants selon la revendication 4, **caractérisé par le fait qu'**une roue (34) à denture externe (35) est montée libre en rotation sur une portion excentrée (33) d'un arbre (32) solidaire de la molette d'actionnement (31), qu'un moyen (36) est prévu pour empêcher ladite roue à denture externe de tourner tout en lui laissant une liberté de mouvement et que l'élément rotatif précité (26), monté libre en rotation sur l'arbre (32) de la molette d'actionnement, comporte une denture interne (38) capable de coopérer avec la denture externe précitée (35).

6. Siège de sécurité pour enfants selon la revendication 5, **caractérisé par le fait que** la roue (34) à denture externe (35) comporte une dent de moins que la denture interne (38) de l'élément rotatif.

7. Siège de sécurité pour enfants selon la revendication 5, **caractérisé par le fait que** la roue (34) à denture externe comporte un plot (36) en saillie coopérant avec une lumière (37) pratiquée sur la coque.

8. Siège de sécurité pour enfants selon l'une quelconque des revendications précédentes, **caractérisé par le fait que** les axes (29, 30) de support et de pivotement des côtés latéraux (23, 24) de la coque présentent chacun des extrémités coaxiales pivotant dans des paliers solidaires de la coque et une partie intermédiaire sinueuse (45) coopérant avec deux demi-carcasses en matière plastique moulée.

9. Siège de sécurité pour enfants selon l'une quelconque des revendications précédentes, **caractérisé par le fait que** l'écrou pivotant (11) est monté sur un axe (12) solidaire du châssis support de la coque.

10. Siège de sécurité pour enfants selon l'une quelconque des revendications précédentes, **caractérisé par le fait que** la vis rotative (10) est à pas rapide et est disposée dans le plan médian du siège, sous la coque, une molette de commande (22) étant montée à l'extrémité de la vis rotative, sur la face inférieure externe de la coque.

## Patentansprüche

1. Sicherheitssitz für Kinder, der auf einem Kraftfahrzeugsitz angebracht werden soll, jener Art, die eine Schale (2), welche eine Wanne mit zwei lateralen Seiten (23, 24) bildet, und einen Stützrahmen (3) für die Schale (2) umfasst, der zur Anordnung auf dem Kraftfahrzeugsitz ausgeführt ist, wobei die Schale bezüglich des Stützrahmens mittels einer Neigungseinstellvorrichtung (9) beweglich ist, die eine Drehspindel (10) aufweist, welche mit einer schwenkbaren Mutter (11) zusammenwirkt, wobei die lateralen Seiten (23, 24) der Schale mittels einer Breiteneinstellvorrichtung (25) schwenkbar angebracht sind, wobei die Breiteneinstellvorrichtung Folgendes umfasst:
- ein Drehelement (26);
- eine Drehbewegungsübertragungsvorrichtung (25), die zwischen einem Betätigungsrad (31) und dem Drehelement (26) angebracht ist;
- und zwei Verbindungsstangen (27, 28) von im Wesentlichen gleicher Länge, die jeweils an einem ihrer Enden an dem Drehelement (26) and an ihrem anderen Ende an einer Achse (29, 30) zum Stützen und Schwenken der lateralen Seiten der Schale angelenkt sind,
**dadurch gekennzeichnet, dass** das Drehelement (26) so um die Achse der Drehspindel der Neigungseinstellvorrichtung herum angebracht ist, dass es sich bezüglich der Spindel frei drehen kann.

2. Sicherheitssitz für Kinder nach Anspruch 1, **dadurch gekennzeichnet, dass** das Drehelement zwei Flächen (39) aufweist, die mit zwei fest mit der Schale (2) verbundenen Hubendanschlägen (40) in Kontakt treten können, um die Drehung des Drehelements (26) zu begrenzen.

3. Sicherheitssitz für Kinder nach Anspruch 1 oder 2, **dadurch gekennzeichnet, dass** die Drehbewegungsübertragungsvorrichtung (25) ein Mittel zur Untersetzung der auf das Betätigungsrad ausgeübten Drehkraft umfasst.

4. Sicherheitssitz für Kinder nach einem der vorhergehenden Ansprüche, **dadurch gekennzeichnet, dass** die Drehbewegungsübertragungsvorrichtung eine Anordnung aus zwei Zahnrädern mit parallelen Achsen umfasst, von denen eines gegen Drehen gesperrt ist.

5. Sicherheitssitz für Kinder nach Anspruch 4, **dadurch gekennzeichnet, dass** ein mit einer Außenverzahnung (35) versehenes Rad (34) frei drehbar auf einem außermittigen Teil (33) einer fest mit dem Betätigungsrad (31) verbundenen Welle (32) angebracht ist, dass ein Mittel (36) dazu vorgesehen ist, eine Drehung des mit einer Außenverzahnung versehenen Rads zu verhindern, wobei ihm aber eine Bewegungsfreiheit gelassen wird, und dass das oben genannte frei drehbar auf der Welle (32) des Betätigungsrads angebrachte Drehelement (26) eine Innenverzahnung (38) aufweist, die mit der oben genannten Außenverzahnung (35) zusammenwirken kann.

6. Sicherheitssitz für Kinder nach Anspruch 5, **dadurch gekennzeichnet, dass** das mit einer Außenverzahnung (35) versehene Rad (34) einen Zahn weniger als die Innenverzahnung (38) des Drehelements aufweist.

7. Sicherheitssitz für Kinder nach Anspruch 5, **dadurch gekennzeichnet, dass** das mit einer Außenverzahnung versehene Rad (34) einen vorstehenden Nocken (36) aufweist, der mit einer in der Schale ausgebildeten Öffnung (37) zusammenwirkt.

8. Sicherheitssitz für Kinder nach einem der vorhergehenden Ansprüche, **dadurch gekennzeichnet, dass** die Achsen (29, 30) zum Stützen und Schwenken der lateralen Seiten (23, 24) der Schale jeweils koaxiale Enden, die in fest mit der Schale verbundenen Lagern schwenken, und einen gewundenen Zwischenteil (45) aufweisen, der mit zwei Körperhälften aus geformtem Kunststoffmaterial zusammenwirkt.

9. Sicherheitssitz für Kinder nach einem der vorhergehenden Ansprüche, **dadurch gekennzeichnet, dass** die Schwenkbare Mutter (11) auf einer fest mit dem Schalenstützrahmen verbundenen Achse (12) angebracht ist.

10. Sicherheitssitz für Kinder nach einem der vorhergehenden Ansprüche, **dadurch gekennzeichnet, dass** die Drehspindel (10) ein Steilgewinde aufweist und in der mittleren Ebene des Sitzes unter der Schale angeordnet ist, wobei ein Bedienrad (22) am Ende der Drehspindel an der untere Außenseite der Schale angebracht ist.

## Claims

1. Child's safety seat designed to be mounted on a motor vehicle seat, of the type comprising a shell (2) forming a bucket with lateral sides (23, 24) and a support frame (3) for the shell (2), suitable for positioning on the motor vehicle seat, it being possible to move the shell relative to the support frame by means of a tilt adjusting device (9) comprising a rotary screw (10) engaging with a pivoting nut (11), the lateral sides (23, 24) of the shell being able to be pivoted by means of a width adjusting device (25), the width adjusting device comprising:
- a rotary element (26);
- a rotary movement transmitting device (25) mounted between an actuating knob (31) and the said rotary element (26);
- and two link rods (27, 28) of approximately equal length, each hinged at one end to the said rotary element (26) and at its other end to a spindle (29, 30) for supporting and pivoting the lateral sides of the shell,
**characterized in that** the rotary element (26) is mounted about the axis of the rotary screw of the tilt adjusting device, in such a way as to turn freely relative to the said screw.

2. Child's safety seat according to Claim 1, **characterized in that** the rotary element comprises two surfaces (39) capable of coming into contact with two end stops (40) integral with the shell (2) to limit the rotation of the rotary element (26).

3. Child's safety seat according to Claim 1 or 2, **characterized in that** the rotary movement transmitting device (25) comprises a means of gearing down the rotary effort applied to the actuating knob.

4. Child's safety seat according to any one of the preceding claims, **characterized in that** the rotary movement transmitting device comprises a set of two toothed wheels with parallel axes, one wheel being prevented from rotating.

5. Child's safety seat according to Claim 4, **characterized in that** an externally toothed (35) wheel (34) is free to rotate on an eccentric portion (33) of a shaft (32) connected to the actuating knob (31), **in that** a means (36) is provided to prevent the said externally toothed wheel rotating but allow it a certain freedom of movement, and **in that** the aforementioned rotary element (26), which is free to rotate on the shaft (32) of the actuating knob, comprises internal teeth (38) capable of engaging with the abovementioned external teeth (35).

6. Child's safety seat according to Claim 5, **characterized in that** the externally toothed (35) wheel (34) has one tooth less than there are internal teeth (38) on the rotary element.

7. Child's safety seat according to Claim 5, **characterized in that** the externally toothed wheel (34) comprises a projecting stud (36) engaging with an aperture (37) formed in the shell.

8. Child's safety seat according to any one of the preceding claims, **characterized in that** the spindles (29, 30) for supporting and pivoting the lateral sides (23, 24) of the shell each have coaxial ends that pivot in bearings mounted in the shell and a curved intermediate part (45) engaging with two half-bodies made of moulded plastic.

9. Child's safety seat according to any one of the preceding claims, **characterized in that** the pivoting nut (11) is mounted on a spindle (12) connected to the support frame of the shell.

10. Child's safety seat according to any one of the preceding claims, **characterized in that** the rotary screw (10) has a fast pitch and lies in the mid-plane of the seat, underneath the shell, with a control knob (22) being mounted on the end of the rotary screw, on the external lower face of the shell.
